# EUROPEAN PATENT SPECIFICATION

(11) **EP 1 671 839 B1**
(45) Date of publication and mention of the grant of the patent: **02.07.2008**
(21) Application number: 05111895.8
(22) Date of filing: 09.12.2005
(51) Int. Cl.: B60N 2/28

(54) **Child seat base**
Träger für einen Kindersitz
Support d'un siège pour enfant

(30) Priority: 14.12.2004 FI 20045478
(43) Date of publication of application: 21.06.2006
(73) Proprietor: Oy Klippan Ab, 01370 Vantaa (FI)
(72) Inventor: Martin, Bror, Västerskog 01220 (FI)
(74) Representative: Roitto, Klaus

(56) References cited:
- EP-A- 1 415 851
- WO-A-20/04002773
- US-A- 5 685 603
- US-A1- 2003 209 926

## Description

### BACKGROUND OF THE INVENTION

The invention relates to a child seat base to be fastened to an anchoring system for a child seat in a vehicle. More particularly, the invention relates to a child seat base comprising a frame including a first frame part and a second frame part, the frame parts constituting the two main parts of the frame, the first frame part serving to support the child seat, and the second frame part serving to lock the child seat/child seat base combination by means of a locking mechanism to the anchoring system of the vehicle, the first frame part comprising an abutting part to face the second frame part and the backrest in the vehicle seat when the child seat/child seat base combination is in a final installed position in the vehicle, and the second frame part being displaceable relative to the first frame part for bringing the child seat/child seat base combination to said final installed position, and the child seat base comprising a locking device for locking the abutting part and the first frame part to optional desired displaced positions relative to the second frame part and at a desired distance from the locking mechanism.

Document WO 2004/002773, which is considered as the closest prior-art discloses an Isofix seat fastening frame base.

Such child seat bases have become increasingly common during the last few years. "Isofix" is the name of a known anchoring system by means of which a child seat/child seat base combination can be fastened to a vehicle. The Isofix system enables an extremely steady fastening of the child seat/child seat base combination and it can therefore be considered to constitute a system that improves traffic safety for small children transported in a child seat in a vehicle.

However, the problem in known child seat bases is that the structure of the locking system by means of which the first frame part is locked relative to the second frame part is complicated. The complicated structure comprises a plurality of mobile parts and constitutes therefore an increased risk in that a part, e.g. a spring, in the structure will break. This, in turn, can result in the frame parts of the child seat base not being locked in the intended manner to the anchoring system, which can have fatal consequences in a crash for not only the child being transported in the child seat but also for others in the car. A known child seat base comprises a locking device having a stopper loaded with a helical spring. The helical spring serves to ensure that the frame parts are correctly locked to each other by means of the locking device. Safety depends on the condition of the helical spring, for example. A broken spring or a spring that has lost its spring force results in the frame parts not being securely locked to each other.

### BRIEF DESCRIPTION OF THE INVENTION

The object of the present invention is to achieve locking of the first frame part to the second frame part with simple and operationally reliable means and thereby to improve the safety of child seat bases of the above-described type.

For said purpose, the child seat base according to the invention is characterized in that

the locking device comprises an elongated flexing element that is fastened to the first frame part and to the second frame part,

the elongated flexing element is provided with a spring force arranged to counteract an opening force that is required for opening the locking device from a locked position, wherein the first frame part is locked to the second frame part, to a free position wherein the first frame part is displaceable relative to the second frame part, and

the locking device comprises a first locking means and a second locking means cooperating therewith, the first locking means being arranged in the elongated flexing element and the second locking means being arranged in the frame.

The elongated flexing element is preferably a flat element. Such a flat element is easy to manufacture from steel, whereby its service life is practically unlimited. Furthermore, a flat element takes up little space in the structure.

The first locking means together with the second locking means preferably comprise a projection that cooperates with a recess. Such a locking means is simple to manufacture for instance by punching desired projections and/or recesses, such as holes in the elongated flexing element, and by punching/printing recesses, such as holes, cooperating therewith, and/or projections directly in the frame of the child seat base or a part fastened to the frame. Thus, the recesses can alternately be provided in the elongated flexing element or in that frame part of the frame, whereto the elongated flexing element is not fastened.

The elongated flexing element is preferably fastened to the second frame part and arranged to be displaced with the second frame part when the latter is being displaced relative to the first frame part. Such a structure enables a simple and easily adjustable structure for bending the elongated flexing element and thereby opening the locking device.

Preferred embodiments of the invention are described in the attached claims 2 to 17.

The most important advantages of the child seat base of the invention are that it is operationally reliable, easy to use and besides simple to manufacture.

### BRIEF DESCRIPTION OF THE FIGURES

In the following, a preferred embodiment of the invention will be described with reference to the attached drawing, wherein
Figure 1 shows a three-dimensional side view of the child base at an about 45-degree angle seen from above,
Figure 2 shows two main components of the child base separated from one another and seen at the same angle as in Figure 1,
Figure 3 illustrates the locking device and locking arrangement of the child seat base seen straight from above and the locking arrangement in an operational position corresponding to the operational position in Figure 1 and allowing the child seat base to be pushed against the anchoring system of the vehicle,
Figure 4 illustrates the locking device and locking arrangement of the child seat base seen straight from above, and the locking arrangement in a locked position in a finally installed child seat/child seat base combination,
Figures 5 and 6 show a component (a lock plate) of the locking device seen in the longitudinal direction of the child seat base and from the side, respectively, and
Figures 7 and 8 are top views of an elongated flexing element of the child seat base seen from the side.

### DETAILED DESCRIPTION OF THE INVENTION

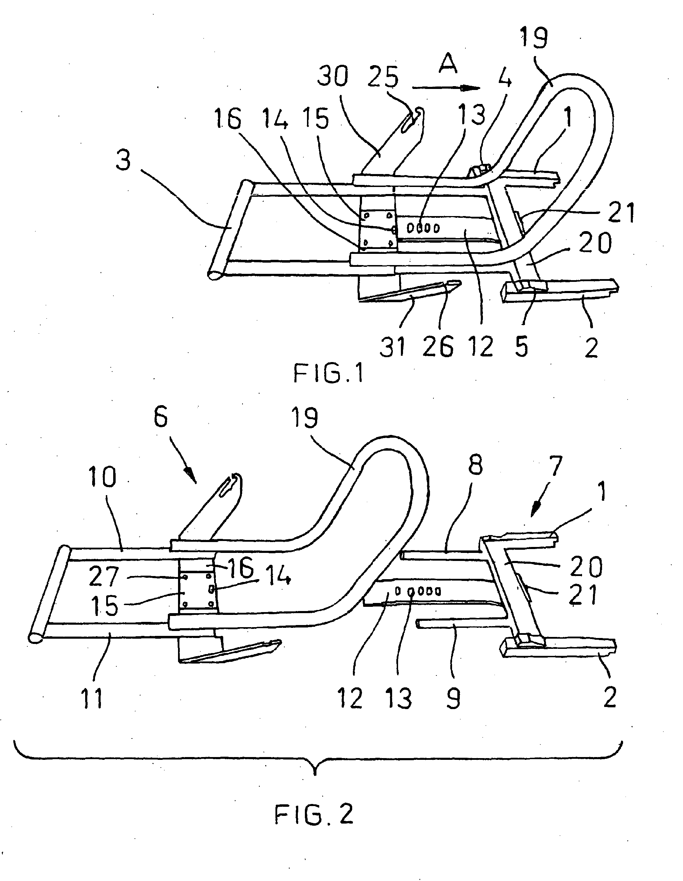

Figure 1 shows the child seat base in a so-called push-in position allowing lock contacts 1, 2 in the child seat base to be pushed into the anchoring system of a vehicle. The anchoring system is not shown in the drawing, since it is of a known, so-called Isofix type. In contrast, the lock contacts 1, 2 are shown that are to engage with the anchoring system. The lock contacts 1, 2, which together with the anchoring system constitute a locking mechanism, engage with the anchoring system when the child seat base is pushed in the direction of arrow A towards the anchoring system (which is, as mentioned, not shown in the figure), suitably by manoeuvring a transverse tube 3. Lock knobs 4 and 5 or corresponding locking controllers are then displaced for achieving the locking of the locking mechanism to the vehicle. When/if the child seat base is to be released from the anchoring system, the lock knobs 4 and 5 are opened, after which the child seat base can be drawn in a direction opposite to arrow A by suitably holding the transverse tube 3, whereby the lock contacts 1, 2 are released from the anchoring system.

The child seat base comprises a frame including a first frame part 6 and a second frame part 7. In Figure 2, the frame parts 6, 7, which constitute the two main parts of the frame, are shown separate from one another to illustrate the structure of the frame. The frame is a tube frame, since such frames are solid and light. The frame, however, does not necessarily have to be a tube frame. Instead of a tube frame, a frame can be employed that comprises only some tube parts or none at all.

The frame part 6 serves to receive and support a child seat (not shown). Reference numeral 19 denotes an abutting part that is comprised by the frame part 6 and is to rest against the backrest in the seat (not shown in the drawing) of the vehicle when the child seat base is correctly installed.

The frame part 7 supports the lock contacts 1, 2 and is telescopically displaceable relative to the frame part 6. The telescopic displacement is achieved by the tube parts 8 and 9 of the frame part 6 being insertable into tube parts 10 and 11, respectively, of the frame part 6. The latter tube parts have an inner diameter exceeding the outer diameter of the tube parts 8, 9. Instead of the tube parts 8, 9, elongated parts sliding with respect to the frame part 6 and supported by holders in the form of rails, for example, are also feasible.

In Figure 1, showing the push-in position of the child seat base, a displacement of the frame part 6 relative to the frame part 7 is prevented by means of a locking arrangement, but a displacement of the entire child seat base in the direction of arrow A, i.e. in the direction towards the anchoring system and the lock contacts 1, 2, is allowed on the basis of the locking arrangement that holds the frame parts 6 and 7 in the desired locked position relative to one another. The structure of the locking arrangement will be described in the following.

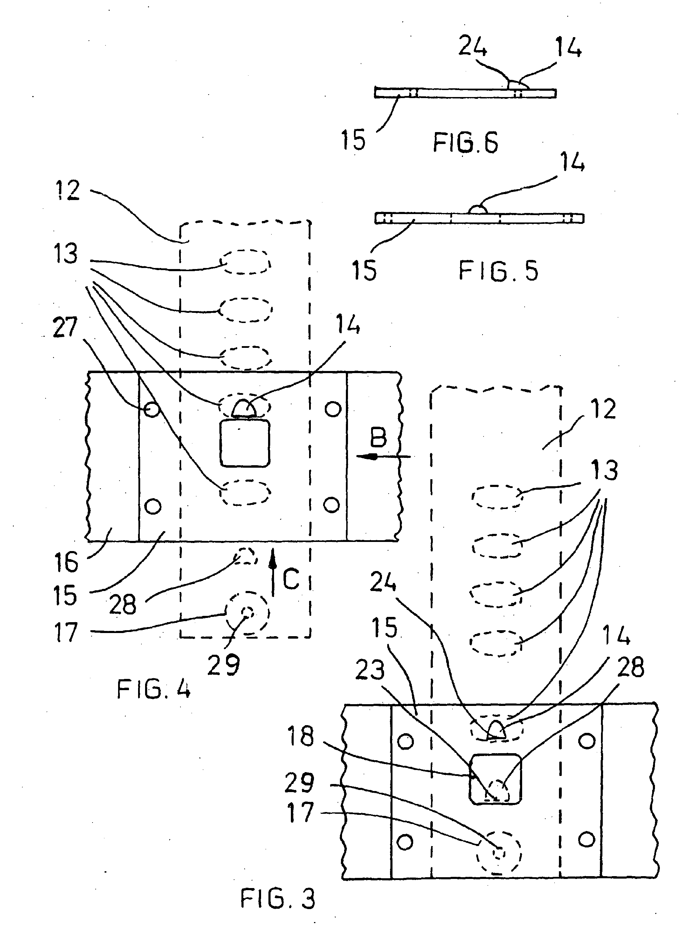

In Figure 1, the frame part 6 is connected with the frame part 7 by means of a spring plate 12 of steel. The steel is suitably spring steel. The spring plate 12 is fastened at one of its ends to the frame part 7 and at its second end to the frame part 6 by means of a locking device comprising a number of holes 13 arranged along the longitudinal direction of the spring plate 12, and a projection 14 in a lock plate 15, which is fastened to a transverse part 16 in the frame part 6 by means of four rivets 27 or other suitable fastening means. When one of the holes 13 is brought to cooperation with the projection 14, the displacement of the frame part 6 away from the frame part 7 is prevented, provided the locking arrangement is not opened. Figure 3 shows a locked position wherein the projection 14 is locked in a hole 13 in the spring plate 12. Figure 4 shows the spring plate 12 locked to the projection 14 by means of another hole than that in Figure 3.

The spring plate 12 is provided with a spring force arranged to counteract an opening force required for opening the locking device, constituted by the spring plate, the projection 14 and the hole 13, from a locked position wherein the frame part 6 is locked to the frame part 7, to a free position wherein the frame part 6 can be displaced relative to the frame part 7.

The reason why the frame part 6 has to be displaceable relative to the frame part 7 is that it has to be possible to place the abutting part 19 against the backrest of the vehicle seat when the child seat base is finally installed in the vehicle. When the intention is to displace the frame part 6 relative to the frame part 7, the spring plate 12 is lifted upwards by means of a handle 17 fastened to a hole 29 in the spring plate. In Figures 3 and 4, the handle 17 and the hole 29 are denoted with a dashed line. When the handle 17 is lifted, the edges of the hole 13 are released from the engagement with the projection 14.

The projection 14 is tapered (wedge-shaped) in the direction towards the lock contacts 1, 2 and thus comprises a "high end" 24 (which can be called a "wider part"), which faces away from the lock contacts 1,2, (and towards the transverse tube 3), see Figure 6 that shows the lock plate 15 of Figure 4 seen in the direction of arrow B. The "low end" (which can be called a "narrow end") of the projection 14 faces thus the lock contacts 1,2. Owing to this, the edge 20 of the hole 13 is able to better glide over the projection 14 and the handle 17 needs not be lifted with strong force to open the locking device and displace and lock the frame part 6 into the desired position by bringing the edge of a hole 13, which is closer to the lock contacts 1, 2, into engagement with the projection 14. Said displacement and locking have to be performed in order to bring the abutting part 19 against the backrest of the vehicle, and thus arrange the child seat base/child seat combination in final installed position in the vehicle seat.

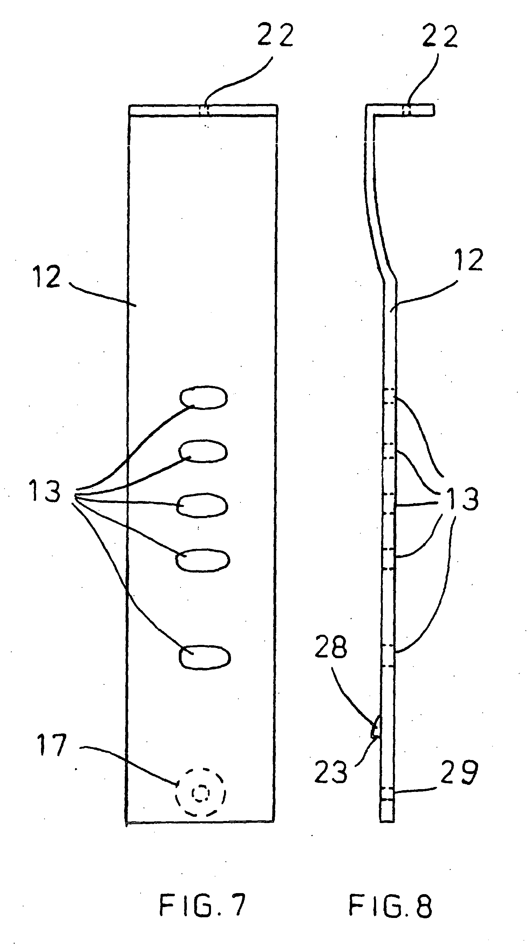

In Figure 3, one can see that the displacement of the frame part 6 relative to and in a direction towards the frame part 7 is prevented by means of a projection 28 arranged on the lower side of the spring plate 12 and that fits into an aperture 18 in the lock plate 15, see Figure 8 that shows a side view of the spring plate. Figures 8 and 1 show that the projection 28 is designed wedge-like in the direction towards the lock contacts 1, 2, i.e. the "high end" 23 of the projection, like that of the projection 14, faces towards the transverse tube 3 and the low end of the projection faces towards the lock contacts. Owing to this, a relatively light force is required to lift the spring plate 12 to enable a displacement of the frame part 6 in the direction towards the lock contacts 1, 2, but a relatively high lifting force is required to release the projection 28 of the spring plate 12 from the engagement with the aperture 18 of the lock plate to enable a release of the frame part 6 from the frame part 7 by means of a displacement of the former away from the lock contacts 1, 2. The "high end" 23 of the projection 28 (see Figures 8 and 3), like the "high end 24" of the projection 14 (see Figures 6 and 3) prevents the displacement of the frame part 6 away from the frame part 7 in a head-on collision. In spite of this, it is necessary to use safety belts (the standard safety belts of the car), which pass through slits or slots 25 and 26 provided in the flank parts 30, 31 of the frame part 6. Owing to the flank parts 30, 31 it is thus possible to fasten the child seat/child seat base combination extremely steadily to the car, which also decreases the stress on the lock contacts 1, 2 in a head-on collision.

Figure 5 shows the lock plate 15 in the longitudinal direction of the child seat base, i.e. in the direction of arrow A in Figure 1 and in the direction of arrow C in Figure 4.

Figure 6 shows a side view of the lock plate 15, i.e. in the direction of arrow B in Figure 4.

Figures 7 and 8 show a top view and a side view of the spring plate 12. The spring plate 12 has five holes 13 for locking the frame part 6 in the desired position with respect to the frame part 7. Thus, five different positions are possible. The end of the spring plate 12 opposite to the end provided with the handle 17 is shaped in order to receive and grip a transverse support 20 of the frame part 7. Here, the end of the spring plate 12 is L-shaped, cf. Figure 8. The spring plate 12 is fastened with a rivet 21 to the transverse support 20 of the child seat base. In Figures 7 and 8, reference numeral 22 denotes the hole for the rivet 21.

The invention was described above only by means of an example and it is mentioned therefore that the invention can be implemented in a plurality of ways within the scope of the attached claims. In this connection, the shape of the frame can vary; the number and shape of the holes in the spring plate can be different. Instead of holes, recesses can be employed, which do not form holes in the spring plate. Instead of placing one end of the spring plate 12 and the lock plate 15 on top of the transverse part 16, said end of the spring plate and the lock plate could very well be placed under the transverse part 16, whereby the holes of the spring plate can be disengaged from the lock plate by pressing said end of the spring plate downwards. Instead of arranging the recesses in the spring plate and the projection in the lock plate, the spring plate could very well comprise a plurality of projections and the lock plate could comprise an aperture for receiving said projections. The number of recesses and projections can vary. A lock plate 15 is not necessary, since projections and/or recesses could very well be provided directly in the frame, in the transverse part 16, for example. In the embodiment shown in the drawing, the spring plate is arranged in a plane parallel to a bottom plane constituted by the child seat base. This is not absolutely necessary, in spite of the fact that a spring plate arranged in this manner takes up little space and makes it easy to bend the spring plate for operating the locking device. Instead of a spring plate, an elongated flexing element of another shape could very well be employed. It is essential, however, to the invention that an elongated flexing element, such as the spring plate shown, constitutes, together with the frame, a stopper system comprising projections and recesses. The shape of the projections and the recesses can vary. Accordingly, the projection 14 (and 28) can be shaped as a pin, for example. The recesses do not have to be elongated holes 13.

## Claims

1. A child seat base to be fastened to an anchoring system for a child seat in a vehicle, the child seat base comprising a frame including a first frame part (6) and a second frame part (7), the frame parts constituting the two main parts of the frame, the first frame part (6) serving to support the child seat, and the second frame part (7) serving to lock the child seat/child seat base combination by means of a locking mechanism (1, 2) to the anchoring system of the vehicle, the first frame part comprising an abutting part (19) to face the second frame part and the backrest in the vehicle seat when the child seat/child seat base combination is in a final installed position in the vehicle, and the second frame part being displaceable relative to the first frame part for bringing the child seat/child seat base combination to said final installed position, and the child seat base comprising a locking device (12, 13, 14) for locking the abutting part and the first frame part to optional desired displaced positions relative to the second frame part and at a desired distance from the locking mechanism, **characterized in that**
the locking device comprises an elongated flexing element (12) that is fastened to the first frame part (6) and to the second frame part (7),
the elongated flexing element (12) is provided with a spring force arranged to counteract an opening force that is required for opening the locking device (12, 13, 14) from a locked position, wherein the first frame part (6) is locked to the second frame part (7), to a free position wherein the first frame part is displaceable relative to the second frame part, and
the locking device comprises a first locking means (13) and a second locking means (14) cooperating therewith, the first locking means being arranged in the elongated flexing element (12) and the second locking means being arranged in the frame.

2. A child seat base as claimed in claim 1, **characterized in that** the elongated flexing element (12) is a flat element.

3. A child seat base as claimed in claim 1 or 2, **characterized in that** the first locking means together with the second locking means comprise a projection (14) cooperating with a recess (13) for achieving a locking of the locking device.

4. A child seat base as claimed in claim 1 or 2, **characterized in that** the first locking means comprises recesses (13) arranged along the elongated flexing element (12), the recesses being arranged to cooperate with at least one projection (14) in the frame for achieving a locking of the locking device.

5. A child seat base as claimed in claim 4, **characterized in that** the recesses are holes (13).

6. A child seat base as claimed in claim 4 or 5, **characterized in that** the projection (14) is designed wedge-like comprising a high end (24) and a low end in such a manner that the low end of the projection faces the locking mechanism (1, 2).

7. A child seat base as claimed in claim 1,**characterized in that** the first locking means comprises projections arranged along the elongated flexing element, the projections being arranged to cooperate with recesses in the frame.

8. A child seat base as claimed in any one of the preceding claims, **characterized in that** the elongated flexing element (12) is fastened to the second frame part (7) and arranged to be displaced with the second frame part when the latter is being displaced relative to the first frame part (6).

9. A child seat base as claimed in claim 1, **characterized in that** an actuating means (17) is fastened to the elongated flexing element (12) and that the locking device is arranged to be opened when the actuating means is pressed downwards towards the child seat base.

10. A child seat base as claimed in claim 1, **characterized in that** an actuating means (17) is fastened to the elongated flexing element (12) and that the locking device is arranged to be opened when the actuating means is pulled upwards from the child seat base.

11. A child seat base as claimed in any one of the preceding claims, **characterized in that** a locking arrangement (28, 18) arranged to lock the first frame part (6) to the second frame part (7) into an end position that constitutes a push-in position of the child seat base, wherein a displacement of the first frame part relative to the second frame part in such a manner that the abutting part (19) moves in the direction against the locking mechanism (1, 2) is prevented, and wherein the abutting part (19) is at a longer distance from the locking mechanism (1, 2) than when the child seat/child seat frame combination is in a final installed position.

12. A child seat base as claimed in claim 11, **characterized in that** the locking arrangement comprises a first locking element (17) and a second locking element (18) cooperating therewith, the first locking element being arranged in the elongated flexing element (12) and the second locking element being arranged in the first frame part (6).

13. A child seat base as claimed in claim 12, **characterized in that** the elongated flexing element (12) is provided with a spring force arranged to counteract a force required to open the locking arrangement (28, 18) from a locked position, wherein the first frame part (6) is locked into the second frame part (7), to a free position wherein the first frame part is displaceable relative to the second frame part in such a manner that the abutting part (19) is displaced in the direction towards the locking mechanism (1, 2).

14. A child seat base as claimed in claim 13, **characterized in that** the first locking element together with the second locking element comprises a projection (28) that cooperates with a recess (18).

15. A child seat base as claimed in claim 14, **characterized in that** the projection (28) forms part of the elongated flexing element (12) and the recess (18) forms part of the frame.

16. A child seat base as claimed in claim 15, **characterized in that** the projection (28) is designed wedge-shaped and has a high end (23) and a low end in such a manner that the low end of the projection faces towards the locking mechanism (1, 2).

17. A child seat base as claimed in claim 2, **characterized in that** the flat element (12) is arranged in a plane parallel with a bottom plane formed by the chlid seat base.

## Patentansprüche

1. Träger für einen Kindersitz, der an einem Verankerungssystem für einen Kindersitz in einem Fahrzeug zu befestigen ist, wobei der Träger für einen Kindersitz einen Rahmen mit einem ersten Rahmenteil (6) und einem zweiten Rahmenteil (7) umfasst, wobei die Rahmenteile die beiden Hauptteile des Rahmens bilden, wobei das erste Rahmenteil (6) dazu dient, den Kindersitz zu tragen, und das zweite Rahmenteil (7) dazu dient, um die Kombination aus Kindersitz/Träger für den Kindersitz durch einen Verriegelungsmechanismus (1, 2) mit dem Verankerungssystem des Fahrzeugs zu verriegeln, wobei das erste Rahmenteil ein anliegendes Teil (19) umfasst, um dem zweiten Rahmenteil und der Rückenlehne in dem Fahrzeugsitz gegenüberzuliegen, wenn die Kombination aus Kindersitz/Träger für den Kindersitz in einer endgültigen installierten Position in dem Fahrzeug ist, und das zweite Rahmenteil bezogen auf das erste Rahmenteil verlagerbar ist, um die Kombination aus Kindersitz/Träger für den Kindersitz in die endgültige installierte Position zu bringen, und der Träger für einen Kindersitz eine Verriegelungsvorrichtung (12, 13, 14) zum Verriegeln des anliegenden Teils und des ersten Rahmenteils in optional gewünschten verlagerten Positionen bezogen auf den zweiten Rahmenteil und bei einem gewünschten Abstand von dem Verriegelungsmechanismus umfasst, **dadurch gekennzeichnet, dass**
die Verriegelungsvorrichtung ein längliches Biegeelement (12) umfasst, das an dem ersten Rahmenteil (6) und dem zweiten Rahmenteil (7) befestigt ist,
das längliche Biegeelement (12) mit einer Federkraft ausgestattet ist, die angeordnet ist, um einer Öffnungskraft entgegenzuwirken, die zum Öffnen der Verriegelungsvorrichtung (12,13,14) von einer verriegelten Position, bei der das erste Rahmenteil (6) mit dem zweiten Rahmenteil (7) verriegelt ist, in eine freie Position, bei der das erste Rahmenteil bezogen auf das zweite Rahmenteil verlagerbar ist, erforderlich ist, und
die Verriegelungsvorrichtung ein erstes Verriegelungsmittel (13) und ein damit zusammen arbeitendes zweites Verriegelungsmittel (14) umfasst, wobei das erste Verriegelungsmittel in dem länglichen Biegeelement (12) und das zweite Verriegelungsmittel in dem Rahmen angeordnet ist.

2. Träger für einen Kindersitz gemäß Anspruch 1, **dadurch gekennzeichnet, dass** das längliche Biegeelement (12) ein flaches Element ist.

3. Träger für einen Kindersitz gemäß Anspruch 1 oder 2, **dadurch gekennzeichnet, dass** das erste Verriegelungsmittel zusammen mit dem zweiten Verriegelungsmittel einen Vorsprung (14) umfasst, der mit einer Ausnehmung (13) zusammen arbeitet, um eine Verriegelung der Verriegelungsvorrichtung zu erreichen.

4. Träger für einen Kindersitz gemäß Anspruch 1 oder 2, **dadurch gekennzeichnet, dass** das erste Verriegelungsmittel Ausnehmungen (13) umfasst, die entlang des länglichen Biegeelements (12) angeordnet sind, wobei die Ausnehmungen angeordnet sind, um mit mindestens einem Vorsprung (14) in dem Rahmen zusammen zu arbeiten, um eine Verriegelung der Verriegelungsvorrichtung zu erreichen.

5. Träger für einen Kindersitz gemäß Anspruch 4, **dadurch gekennzeichnet, dass** die Ausnehmungen Löcher (13) sind.

6. Träger für einen Kindersitz gemäß Anspruch 4 oder 5, **dadurch gekennzeichnet, dass** der Vorsprung (14) keilähnlich mit einem hohen Ende (24) und einem niedrig Ende auf eine solche Art und Weise ausgestaltet ist, dass das niedrige Ende des Vorsprungs dem Verriegelungsmechanismus (1, 2) gegenüberliegt.

7. Träger für einen Kindersitz gemäß Anspruch 1, **dadurch gekennzeichnet, dass** das erste Verriegelungsmittel Vorsprünge umfasst, die entlang dem länglichen Biegeelement angeordnet sind, wobei die Vorsprünge angeordnet ist, um mit Ausnehmungen in dem Rahmen zusammen zu arbeiten.

8. Träger für einen Kindersitz gemäß einem der vorhergehenden Ansprüche, **dadurch gekennzeichnet, dass** das längliche Biegeelement (12) an dem zweiten Rahmenteil (7) befestigt und angeordnet ist, um mit dem zweiten Rahmenteil verlagert zu werden, wenn der Letztere bezogen auf den ersten Rahmenteil (6) verlagert wird.

9. Träger für einen Kindersitz gemäß Anspruch 1, **dadurch gekennzeichnet, dass** ein Betätigungsmittel (17) an dem länglichen Biegeelement (12) befestigt ist und dass die Verriegelungsvorrichtung angeordnet ist, um geöffnet zu werden, wenn das Betätigungsmittel nach unten zu dem Träger für einen Kindersitz hin gedrückt wird.

10. Träger für einen Kindersitz gemäß Anspruch 1, **dadurch gekennzeichnet, dass** ein Betätigungsmittel (17) an dem länglichen Biegeelement (12) befestigt ist und dass die Verriegelungsvorrichtung angeordnet ist, um geöffnet zu werden, wenn das Betätigungsmittel nach oben von dem Träger für einen Kindersitz gezogen wird.

11. Träger für einen Kindersitz gemäß einem der vorhergehenden Ansprüche, **dadurch gekennzeichnet, dass** eine Verriegelungsanordnung (28, 18) angeordnet ist, um das erste Rahmenteil (6) mit dem zweiten Rahmenteil (7) in einer Endposition zu verriegeln, die eine Einschubposition des Trägers für einen Kindersitz bildet, wobei eine Verlagerung des ersten Rahmenteils bezogen auf das zweite Rahmenteil auf eine solche Art und Weise, dass sich das anliegende Teil (19) in der Richtung gegen den Verriegelungsmechanismus (1, 2) bewegt, verhindert wird, und wobei das anliegende Teil (19) bei einem größeren Abstand von dem Verriegelungsmechanismus (1, 2) ist, als wenn die Kombination aus Kindersitz/Kindersitz Rahmen in einer endgültigen installierten Position ist.

12. Träger für einen Kindersitz gemäß Anspruch 11, **dadurch gekennzeichnet, dass** die Verriegelungsanordnung ein erstes Verriegelungselement (17) und ein damit zusammen arbeitendes zweites Verriegelungselement (18) umfasst, wobei das erste Verriegelungselement in dem länglichen Biegeelement (12) und das zweite Verriegelungselement in dem ersten Rahmenteil (6) abgeordnet ist.

13. Träger für einen Kindersitz gemäß Anspruch 12, **dadurch gekennzeichnet, dass** das längliche Biegeelement (12) mit einer Federkraft ausgestattet ist, die angeordnet ist, um einer Kraft entgegenzuwirken, die erforderlich ist, um die Verriegelungsanordnung (28, 18) von einer verriegelten Position, bei der das erste Rahmenteil (6) in dem zweiten Rahmenteil (7) verriegelt ist, in eine freie Position zu öffnen, bei der das erste Rahmenteil bezogen auf das zweite Rahmenteil auf eine solche Art und Weise verlagerbar ist, dass das anliegende Teil (19) in der Richtung zu dem Verriegelungsmechanismus (1, 2) hin verschoben wird.

14. Träger für einen Kindersitz gemäß Anspruch 13, **dadurch gekennzeichnet, dass** das erste Verriegelungselement zusammen mit dem zweiten Verriegelungselement einen Vorsprung (28) umfasst, der mit einer Ausnehmung (18) zusammen arbeitet.

15. Träger für einen Kindersitz gemäß Anspruch 14, **dadurch gekennzeichnet, dass** der Vorsprung (28) Teil des länglichen Biegeelements (12) und die Ausnehmung (18) Teil des Rahmens bildet.

16. Träger für einen Kindersitz gemäß Anspruch 15, **dadurch gekennzeichnet, dass** der Vorsprung (28) keilförmig ausgestaltet ist und ein hohes Ende (23) und ein niedriges Ende auf eine solche Art und Weise aufweist, dass das niedrige Ende des Vorsprungs dem Verriegelungsmechanismus (1, 2) zugewandt ist.

17. Träger für einen Kindersitz gemäß Anspruch 2, **dadurch gekennzeichnet, dass** das flache Element (12) in einer Ebene parallel mit einer unteren Ebene angeordnet ist, die durch den Träger für einen Kindersitz gebildet wird.

## Revendications

1. Support de siège pour enfant destinée à être reliée à un système d'ancrage pour un siège pour enfant dans un véhicule, le support de siège pour enfant comportant un châssis comprenant une première partie de châssis (6) et une deuxième partie de châssis (7), les parties de châssis constituant les deux parties principales du châssis, la première partie de châssis (6) servant à supporter le siège pour enfant, et la deuxième partie de châssis (7) servant à verrouiller la combinaison siège pour enfant/support de siège pour enfant au moyen d'un dispositif de verrouillage (1, 2) au système d'ancrage du véhicule, la première partie de châssis comportant une partie (19) de butée située en regard de la deuxième partie de châssis et du dossier dans le siège de véhicule lorsque la combinaison support de siège pour enfant / siège pour enfant est dans une position finale d'installation dans le véhicule, et la deuxième partie de châssis étant mobile par rapport à la première partie de châssis pour amener la combinaison support de siège pour enfant / siège pour enfant dans ladite position finale d'installation, et le support de siège pour enfant comportant un dispositif de verrouillage (12, 13, 14) pour verrouiller ladite pièce de butée et la première partie de châssis dans des positions déplacées désirées optionnelles par rapport à la deuxième partie de châssis et à une distance désirée du dispositif de verrouillage, **caractérisé en ce que** :
le dispositif de verrouillage comporte un élément allongé (12) apte à être fléchi, qui est relié à la première partie de châssis (6) et à la deuxième partie de châssis (7),
l'élément allongé (12) apte à être fléchi présente une force élastique apte à contrecarrer une force d'ouverture qui est requise pour ouvrir le dispositif de verrouillage (12, 13, 14) depuis une position verrouillée, dans laquelle la première partie de châssis (6) est verrouillée à la deuxième partie de châssis (7), vers une position iibre dans laquelle la première partie de châssis est mobile par rapport à la deuxième partie de châssis, et
le dispositif de verrouillage comporte des premiers moyens de verrouillage (13) et des deuxièmes moyens de verrouillage (14) coopérant avec ceux-ci, les premiers moyens de verrouillage étant agencés sur l'élément allongé (12) apte à être fléchi et les deuxièmes moyens de verrouillage étant agencés sur le châssis.

2. Support de siège pour enfant selon la revendication 1, **caractérisé en ce que** l'élément allongé (12) apte à être fléchi est un élément plat.

3. Support de siège pour enfant selon la revendication 1 ou 2, **caractérisé en ce que** les premiers moyens de verrouillage ainsi que les deuxièmes moyens de verrouillage comportent une saillie (14) coopérant avec une cavité (13) pour réaliser un verrouillage du dispositif de verrouillage.

4. Support de siège pour enfant selon la revendication 1 ou 2, **caractérisé en ce que** les premiers moyens de verrouillage comportent des cavités (13) aménagées le long de l'élément allongé (12) apte à être fléchi, les cavités étant agencées pour coopérer avec au moins une saillie (14) sur le châssis pour réaliser un verrouillage du dispositif de verrouillage.

5. Support de siège pour enfant selon la revendication 4, **caractérisé en ce que** les cavités sont des trous (13).

6. Support de siège pour enfant selon la revendication 4 ou 5, **caractérisé en ce que** la saillie (14) est conçue avec une forme de coin, comportant une extrémité haute (24) et une extrémité basse de telle sorte que l'extrémité basse de la saillie soit en regard du dispositif de verrouillage (1, 2).

7. Support de siège pour enfant selon la revendication 1, **caractérisé en ce que** les premiers moyens de verrouillage comportent des saillies disposées le long de l'élément allongé apte à être fléchi, les saillies étant agencées pour coopérer avec des cavités sur le châssis.

8. Support de siège pour enfant selon l'une quelconque des revendications précédentes, **caractérisé en ce que** l'élément allongé (12) apte à être fléchi est relié à la deuxième partie de châssis (7) et agencé pour être déplacé avec la deuxième partie de châssis lorsque cette dernière est déplacée par rapport à la première partie de châssis (6).

9. Support de siège pour enfant selon la revendication 1, **caractérisé en ce qu'**un moyen d'actionnement (17) est relié à l'élément allongé (12) apte à être fléchi et **en ce que** le dispositif de verrouillage est agencé pour être ouvert lorsque le moyen de déclenchement est pressé vers le bas en direction du support de siège pour enfant.

10. Support de siège pour enfant selon la revendication 1, **caractérisé en ce qu'**un moyen d'actionnement (17) est relié à l'élément allongé (12) apte à être fléchi et **en ce que** le dispositif de verrouillage est agencé pour être ouvert lorsque le moyen de déclenchement est tiré vers le haut depuis le support de siège pour enfant.

11. Support de siège pour enfant selon l'une quelconque des revendications précédentes, **caractérisé en ce qu'**un agencement de verrouillage (28, 18) est agencé pour verrouiller la première partie de châssis (6) à la deuxième partie de châssis (7) en une position de fin de course qui constitue une position de contraction du support de siège pour enfant, dans laquelle est empêché un déplacement de la première partie de châssis par rapport à la deuxième partie de châssis de façon que la partie de butée (19) se déplace dans la direction allant contre le dispositif de verrouillage (1, 2), et dans laquelle la partie de butée (19) est à une plus longue distance du dispositif de verrouillage (1, 2) que lorsque la combinaison de châssis de siège pour enfant / siège pour enfant est en position finale d'installation.

12. Support de siège pour enfant selon la revendication 11, **caractérisé en ce que** l'agencement de verrouillage comporte un premier élément de verrouillage (17) et un deuxième élément de verrouillage (18) coopérant l'un avec celui-ci, le premier élément de verrouillage étant agencé sur l'élément allongé (12) apte à être fléchi et le deuxième élément de verrouillage étant agencé sur la première partie de châssis (6).

13. Support de siège pour enfant selon la revendication 12, **caractérisé en ce que** l'élément allongé (12) apte à être fléchi présente une force élastique adaptée pour contrecarrer une force requise pour ouvrir l'agencement de verrouillage (28, 18) à partir d'une position de verrouillage, dans laquelle la première partie de châssis (6) est verrouillée dans la deuxième partie de châssis (7), vers une position libre dans laquelle la première partie de châssis est mobile par rapport à la deuxième partie de châssis de façon que la partie de butée (19) soit déplacée dans la direction allant vers le dispositif de verrouillage (1, 2).

14. Support de siège pour enfant selon la revendication 13, **caractérisé en ce que** le premier élément de verrouillage ainsi que le deuxième élément de verrouillage comportent une saillie (28) qui coopère avec une cavité (18).

15. Support de siège pour enfant selon la revendication 14, **caractérisé en ce que** la saillie (28) fait partie de l'élément allongé (12) apte à être fléchi et la cavité (18) fait partie du châssis.

16. Support de siège pour enfant selon la revendication 15, **caractérisé en ce que** la saillie (28) est conçue en forme de cooin et a une extrémité haute (23) et une extrémité basse de telle façon que l'extrémité basse soit tournée vers le dispositif de verrouillage (1, 2).

17. Support de siège pour enfant selon la revendication 2, **caractérisé en ce que** l'élément plat (12) est agencé dans un plan parallèle à un plan inférieur formé par le support de siège pour enfant.
